# EUROPEAN PATENT APPLICATION

(11) **EP 3 483 674 A1**
(43) Date of publication of application: **15.05.2019**
(21) Application number: 17020528.0
(22) Date of filing: 13.11.2017
(51) Int. Cl.: G05B 15/02

(54) **METHOD FOR CREATION, INSTALLATION, CONFIGURATION AND MAINTENANCE OF THE CONTROLLING SOFTWARE IN BUILDING MANAGEMENT SYSTEMS AND DOMOTICS APPLICATIONS**

(71) Applicant: Lux Italia Srl, 20040 Cambiago (Milan) (IT)
(72) Inventor: Rancic, Gordan, 20056 Trezzo sull'Adda (MI) (IT)

(57) **Abstract**

Method for creation, installation, configuration and maintenance of controlling software in Building Management Systems and domotics applications foresee existence of multiply controlling and supervision programs that are interfaced directly to the sub-system equipment and devices, and running on the dedicated BMS/domotics operating system. Programs are created by the manufacturers of sub-systems or independent third-party developers using BMS/domotics SDK and system emulators and simulators, and are available through the marketplace library, where can be browsed and selected for download directly to the BMS/domotics hardware CPU and installed automatically by the operating system. Configuration of each program is done in-site or remotely. When a new version of the program will be available, it will be stored to the marketplace library, from where operating system will download it automatically, store in on the hardware CPU, terminate execution of the previous version and run newly installed version.

## Description

### BACKGROUND OF THE INVENTION

### Field of the Invention

The present invention relates to method for creation, installation, configuration and maintenance of controlling software in Building Management Systems and domotics applications.

### Description of Prior Art

Building Management System (for now on "BMS") and domotics control hardware is used to control and supervise buildings (professional) and domotics (residential) environment and sub-systems, such as HVAC, illumination, elevators, fire systems etc. The controlling hardware (from now on CPU) contains generic controlling software, created by the hardware supplier. The scope of controlling software is to communicate with the controllers of each sub-system, collect data and parameters about the functioning of the sub-system, configure the sub-system and supervise the alarms. For each sub-system the software will use different communication messages and commands, but in most cases the same type of communication channel (usually ethernet and TCP/IP protocol).

Controlling software, in all cases, is created by the same company (from now on "Supplier") that supplied controlling hardware. This obliges the purchaser of the system (from now on "Customer") to depend directly from the hardware supplier for any further assistance whatever the nature of modification is about.

Controlling software for BMS and domotics applications is very complex, since it must interface different sub-systems from different manufacturers and control their operation. The installation procedure of the controlling software is usually done before the hardware is shipped to the Customer, since it requires time and deep knowledge of the hardware architecture. The installation is done by the expert supplier's technicians in the laboratory.

In order to keep the Customer closely linked to itself, all updates of the controlling software will be installed by the Supplier's expert personal. If Customer will need to implement any structural modification to the system, or will need to add new sub-system to the already existing BMS or domotics installation, it will have to involve Supplier and its expert technicians. In case that the BMS control software is not compatible with the newly added sub-system, Customer will have to wait for the Supplier to develop the part of the controlling algorithm and integrate it into the controlling software.

Since the controlling software is generic and can be used for any type of BMS and domotics plant, it needs to be configured according to particular application requirements. This configuration procedure has to be done by the expert personal, usually engineers from the supplier or third-party expert, and will be done IN SITE where hardware has been already installed. All technicians involved in the control software configuration will work in site for all the time since all control functions will be completed. The configuration procedure could be complex and require days, weeks or even months until all the building or residential sub-systems will be correctly connected and controlled by the CPU and controlling software running on it. Any further modification to either software or configuration still requires intervention of qualified personal.

For the most sub-systems, functionality of the controlling software is limited to collect information about sub-system operation, state of the alarms and parameters of the most significative data, such as temperature, quantity of light or similar. Using controlling software, user can set sub-system parameters, but the regulation of the sub-system is handled by the sub-system controller, where regulating algorithm is executed.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a block diagram of a dedicated BMS and domotics hardware platform architecture represents minimum requirements to permit present invention to operate. This approach is different from the one in use in BMS installations, as it includes all hardware interfaces to interface peripheral sub-system equipment and devices inside the same hardware unit
Fig. 2 is a functional diagram of the system and represents minimum requirements to permit present invention to operate
Fig. 3 is a flowchart of download of the new version of operating system
Fig. 4 is a flowchart of installation of the newly downloaded version of the operating system
Fig. 5 is a flowchart of the download and installation of the new BMS and domotics program - program that hasn't been installed before
Fig. 6 is a flowchart of download of the new version of previously installed BMS and domotics program
Fig. 7 is a flowchart of the installation of newly downloaded BMS and domotics program

### DETAILED DESCRIPTION OF THE INVENTION

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

Reference will now be made to the drawing figures to describe the present invention in detail.

The principle on the base of present innovation is the new approach to the creation, installation, configuration and maintenance of BMS and domotics hardware and software through marketplace library where numerous programs dedicated to the management od single sub-systems, created by different suppliers, will be found.

As a support to present invention, it is necessary to use well defined, standard hardware platform specially designed for BMS and domotics applications and an operating system with standardized hardware drivers and Application Programming Interface (API).

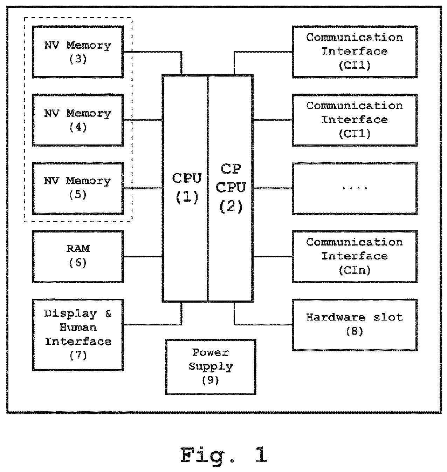

The hardware platform, shown on Fig. 1, is equipped with all hardware necessary to manage any BMS and domotics application. For this purpose, the hardware platform includes a user interface (7), program and data storage memory (3,4,5,6), all necessary communication and peripheral equipment interfaces (CI1, CI2, ... CIn, 8) used in BMS and domotics applications, such as Ethernet, WiFi, Bluetooth, ZigBee, USB, Fiber Optics, RS485, PLC, DALI, KNX, CAN and other. The well-defined, standard hardware platform will permit to the operating system to standardize software drivers and API that are used as a support for this invention.

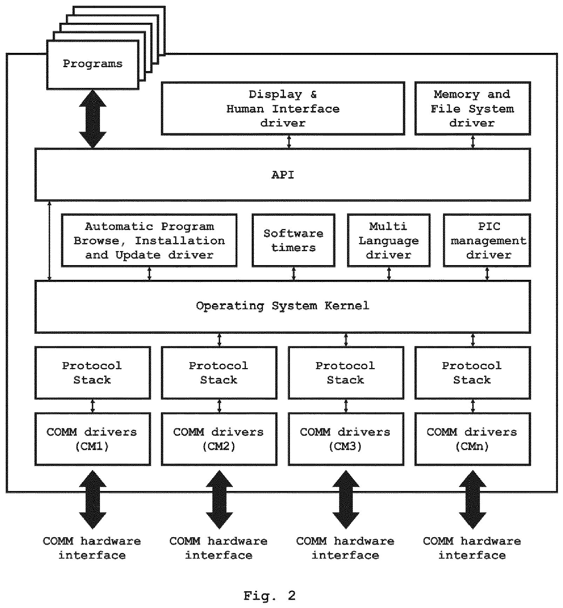

The minimum operating system configuration of the hardware platform CPU, shown on Fig. 2, must be standardized and well defined in order to permit creation, development, installation and maintenance of BMS and domotics programs. Operating system contain all support and functionality for:
- real-time and multi-tasking program execution
- flexible memory manager
- position independent code execution capabilities
- file system management
- multiply timer support
- drivers for all hardware communication interfaces: Ethernet, WiFi, Bluetooth, ZigBee, USB, Fiber Optics, RS485, PLC, DALI, KNX, CAN
- build-in software stacks for all communication protocols used in BMS and domotics installations: TCP/IP/UDP/FTP, BacNET, ArcNET, LonWorks ModBus, ProfiBus, DALI, OpenDMX, DMX512A, Konnex, CanOpen
- screen driver and complete graphics library
- multi-language management
- human device interface: touch screen, keyboard, mouse, joystick, pushbuttons and voice command recognition
- basic I/O hardware drivers
- automatic operating system download and update
- browser for marketplace library
- automatic program downloader and installer
- automatic program updater
- application programming interface

Having the standardized hardware and operating system platform, creation and development of software for BMS and domotics applications will become fast and easy. Instead to execute one complex, huge control software package, BMS and domotics hardware will execute number of small applications created by the either manufacturer of sub-systems or independent software manufacturers and developers worldwide.

The creation software procedure is supported by the dedicated Software Development Kit (SDK), supplied by the operating system manufacturer or third-party software house. The SDK contains all the necessary tools to write, debug and execute software application on development hardware. The manufacturer of the sub-systems or third parties can supply simulators of the sub-system, that will be used during software development procedure to simplify development and debug of the controlling software. The controlling software includes a "software gateway" - the open door for interaction between different program on the same hardware. For example, HVAC controlling program can use the information about motion sensor status from the illumination controlling program to activate heating or cooling inside the space where presence of the persons has been detected. This interaction will be standardized by the operating system to simplify the job.

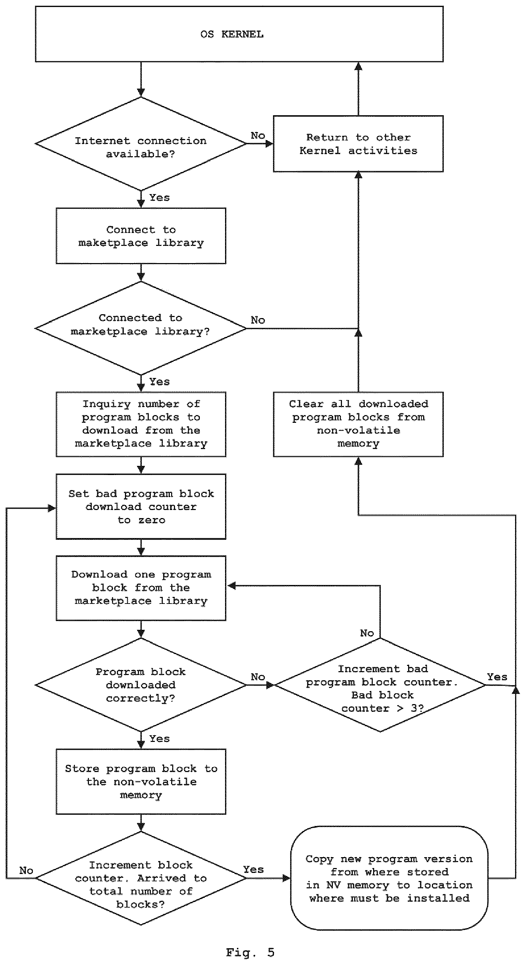

This multiplication of programs for BMS and domotics sub-system management will lead necessary to the creation and organization of a unique marketplace library for BMS and domotics programs. Every program will be stored in the library to permit the Customer to browse and select, directly from the console of the BMS and domotics hardware platform, the most appropriate program that meets requirements of his plant. Once selected, the installation will occur through the download of the application from the marketplace library and automatic storage and installation on the local hardware, as shown on Fig. 5. The whole download and installation procedure will be managed by the operating system:
When operator will select new program for download, after that operating system will ensure connection with the marketplace, it will request the number of program blocks to download. Since program can be very large, and TCP/IP protocol has certain limits in a single message transaction length, program must be fragmented and downloaded in blocks. Then operating system will download on block at the time, check the integrity of the block using message checksum calculation algorithm, and if the downloaded program block will result valid, it will be stored it in a temporary non-volatile memory dedicated for temporary data storage. After each block is downloaded, operating system will increment downloaded program block counter and proceed to download program blocks until the last one will be downloaded and stored on the NV memory. At this point, operating system will copy whole program contents to the location where program will be installed in the NV memory, it will erase temporary NV memory area where program blocks were stored during download and it will add the program name to the list of installed programs so it can be automatically executed during system restart. This represents the end of program installation.

The marketplace library will have a task not just to organize, search and describe BMS and domotics programs scope, but also will permit Customers to valuate programs and leave the feedback and judgment about the quality and other program features, including quality of the program creator services and support.

Configuration of installed program is very important step in BMS and domotics system management. No matter how program is good and has excellent regulation algorithm, wrong or inadequate configuration will lead to malfunction of the plant. The present invention implements graphics approach to the program configuration with the support of auto-learn and auto-recognition function of the peripheral equipment, that simplify and make configuration procedure easy, fast, comprehensible and accessible to either expert personal and the non-expert users. The configuration of the program is meant in two different approaches, according to sub-system complexity and configurator's sill level:
a) locally, IN SITE, by the sub-system supplier expert, customer, sub-system supplier or third-party expert
b) remotely, via world wide web, by the sub-system supplier expert, customer, sub-system supplier or third-party expert

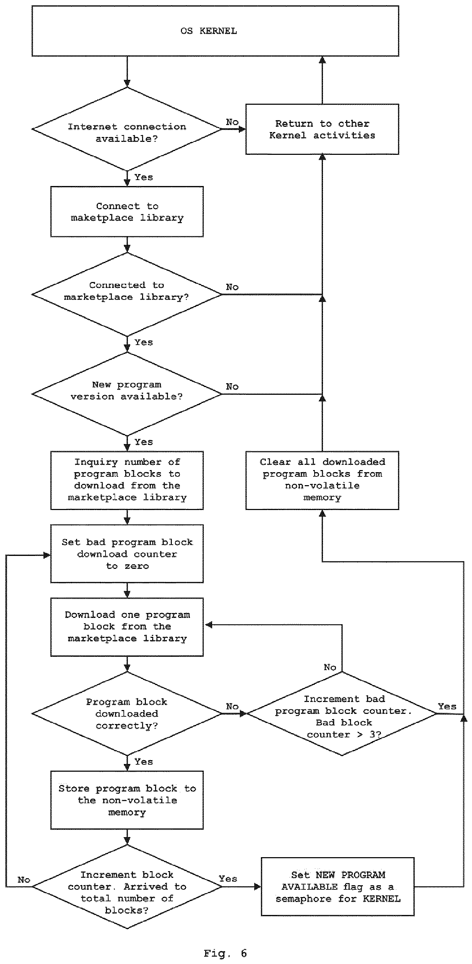

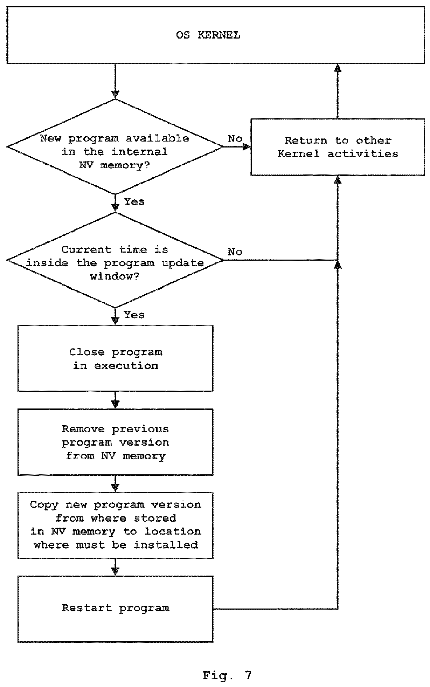

Procedure for BMS and domotics sub-system program maintenance and download is explained on Fig. 6 and 7. When a new version of the program will be available, it will be stored in the marketplace library by the program creator. The operating system of the CPU will check periodically for the new version of all locally installed programs, and will download the new versions when available. This procedure will be fully automatic, executed in the background, without any Customer intervention. The download and installation procedure is very similar to new program installation, explained previously. Once program will be installed, operating system will advise the previous version of the program, currently in execution, to close, and the new version of the program will be started. This shall occur according to configuration decided by the Customer: during non-active periods (i.e. night), or in a well-defined moment, when all systems will be down. For example, elevator system software cannot be interrupted in any period, even during the night, except during periods of maintenance.

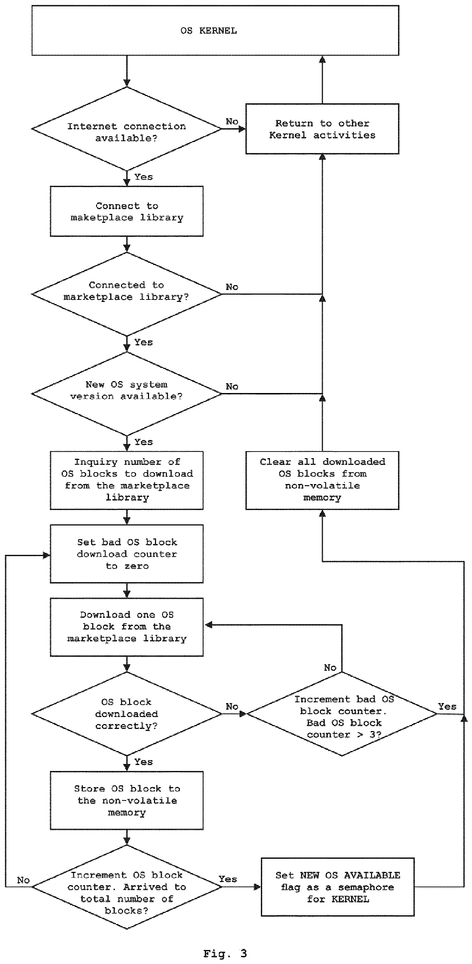

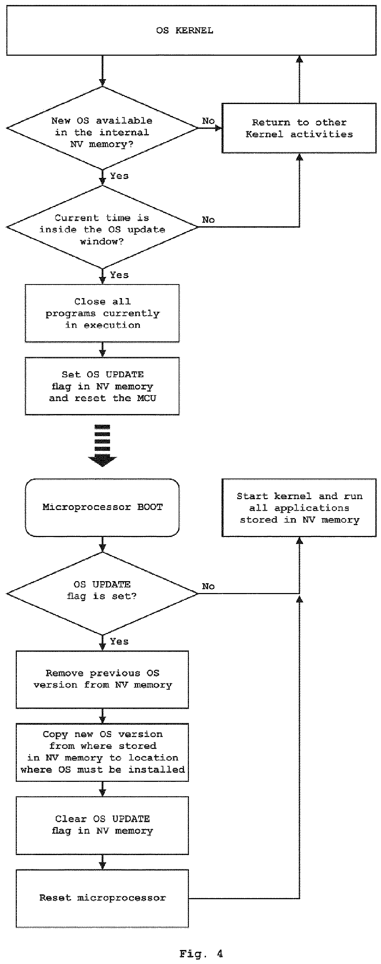

The operating system is also updated automatically, as shown on Fig. 3 and Fig. 4. The operating system will check periodically for the availability of the new version of the operating system and when found, it will download, block by block, entire new operating system version, as explained for new program installation. As shown on fig. 4, when operating system will be stored in a temporary NV memory, a OS UPDATE flag will be set in the NV memory and OS will check if it can update itself. This can occur only in a particular moment, called OS UPDATE WINDOW. The update window is an exact day and time during the week or day when an automatic update procedure can be done. This is necessary to avoid system reset during working hours. Operating system update can be inhibited completely, and permitted only in certain occasions, such as extraordinary system maintenance.

To update itself, the operating system will restart CPU hardware. When CPU will reboot, before to start to execute operating system, it will check if the OS UPDATE flag from the NV memory is set. The reason why this flag is stored in non-volatile memory is because that in case that power will go down during OS update procedure, or incidental reset will occur, volatile memory can be corrupted and loose contents of the OS UPDATE flag.

If OS UPDATE flag is set, CPU will erase previous version of the operating system and copy new operating system from the non-volatile memory where it was stored during download. Once copying procedure is finished, it will erase temporary NV memory storage where new version was stored during download and start execution of newly installed operating system.

## Claims

1. The new BMS and domotics controlling and supervision method, instead to use one or more software applications to configure and supervise sub-system controllers, executes number of independent software applications on the same hardware CPU, each of them controlling and supervising one sub-system equipment directly.

2. The BMS and domotics standardized and dedicated operating system is defined as shown on Fig. 2, with all features to support full BMS and domotics program functionality

3. The BMS and domotics program marketplace library, accessible remotely, via internet or world-wide-web, is defined for BMS and domotics program storage, browsing, search, upload, download and automatic program update

4. According to claim 1, single sub-system control and supervision programs are created by the manufacturers of the sub-system or independent, third-party software manufacturers and stored in the marketplace library available on-line through the world wide web, for download directly to the hardware CPU.

5. According to claim 4, selected application can be downloaded and installed automatically by the operating system running on a hardware CPU.

6. According to claim 1, sub-system controlling and supervising application is configured IN SITE, where BMS and domotics system is installed, or REMOTELY, using world wide web or internet connection. As a support during installation, an "auto-learn" and "auto-recognition" procedures of the peripheral equipment and devices is used.

7. According to claim 1, when a new version of an installed program is available in the marketplace library, operating system of a hardware CPU will automatically download, install, terminate execution of the previous version of the program and run the new version.

8. A Operating System Update Flag (OSUF) is defined and used to signal request for operating system update during boot phase of the BMS and domotics hardware

9. The OSUF (Operating System Update Flag) is stored in a non-volatile memory to avoid flag corruption in case of incidental hardware reset and permit permanent flag value maintenance in case of power-down before the operating system has been updated

10. A BMS and domotics Program Update Time Window is defined, as a well-defined time period during which one controlling program in execution can be interrupted (closed) automatically by the Operating System with the scope to restart new version of the program. The Program Update Time Window is necessary to avoid undesired BMS and domotics services interruption and system malfunctions due to interruption of the controlling and regulation algorithm

11. A BMS and domotics Operating System Window is defined, as a well-defined time period during which execution of the operating system of the controlling hardware can be stopped automatically with the scope of update. The Operating System Update Time Window is necessary to avoid undesired BMS and domotics services interruption and system malfunctions due to interruption of the hardware operation

12. A BMS and domotics program data exchange gateway is defined as well-precise and well-defined mechanism to exchange information between two or more BMS and domotics control programs in execution on the same hardware platform. The mechanism of the data exchange is imposed by the operating system through a common table read-write operation, while contents of a single cells is documented by the manufacturer of each independent program

13. According to claim 4, a BMS and domotics Software Development Kit is defined as a support for program creation, development, debug and maintenance. The BMS and domotics SDK is a software environment with all features for program writing, compilation, debug, simulation and execution and is running on the same or different hardware than the one where program will be installed when development procedure is finished

14. According to claim 13, a BMS and domotics system and sub-system hardware and/or software emulator and/or simulator is defined as a support for program development, debug configuration and maintenance. The BMS and domotics emulator/simulator is any hardware unit and/or software program capable to reproduce partial or full functionality of the BMS and domotics system without necessity to re-create one in a real-world installation

## Amended claims

### Amended claims in accordance with Rule 137(2) EPC.

1. The method for creation, installation, configuration and maintenance of the controlling software in Building Management Systems (BMS) and domotics application (Home Automation) comprises:
a) Development of independent software applications (Apps) used to manage single Building and Home Automation process. The development is done using dedicated Software Development Kit (SDK) created especially for the operating system on which App will be executed
b) Apps Simulation and debugging in a laboratory using dedicated and well-defined simulation hardware and integrated debugger from the SDK
c) Upload and storage of Apps inside the marketplace library, a web portal from where Apps can be downloaded. The App uploader is an integrated function of the SDK
d) Browsing and download of Apps to a dedicated building management and home automation hardware control unit. The hardware control unit is a standardized, well defined hardware platform (Fig. 1), especially designed and optimized for Building Management System and Home Automation equipment control. The hardware control unit comprises electronic circuits, data communication and signal interfaces involved in Building and Home Automation equipment supervision and control. On the hardware control unit is running standardized, well defined operating system, especially designed and optimized for the Building and Home Management, that comprises well defined and standardized Application Programming Interface (API) commands and library functions as support of installed hardware circuits (Fig.2), as an integral part of the operating system, and set of standardized background utility applications as an integral part of the operating system, in support of remote App program upload, automatic program installation and update
e) Automatic start of the App as soon as it has been downloaded successfully on the hardware control unit
f) Local and remote configuration of the Apps according to the building and home automation plant architecture, using system simulator or direct connection to the existing building and home automation equipment
g) Automatic, real-time Apps update each time when a new version of App is available on the marketplace library, as an integrated function of the operating system

2. The method of claim 1 wherein uploading function is managed by an independent program, outside from the SDK

3. The method of claim 1 wherein start of a downloaded and installed App is done manually

4. The method of claim 1 wherein App has been developed by the manufacturer of the building and home automation equipment that is controlled by App

5. The method of claim 1 wherein App has been developed by the independent, third-party developer not involved in a supply of the building and home automation equipment that is controlled by App

6. The method of claim 1 wherein on the marketplace library exist two or more Apps for the same purpose

7. The method of claim 1 wherein the "auto-learn" and "auto-recognition" procedures are used to detect and configure the building and home automation equipment

8. The method of claim 1 wherein Operating System Update Flag (OSUF) is defined and used to signal request to the operating system to be updated during boot phase of the hardware control unit

9. The method of claim 6 wherein OSUF (Operating System Update Flag) is stored in a non-volatile memory to avoid flag corruption in case of incidental hardware reset and permit permanent flag value maintenance in case of power-down before the operating system has been updated

10. The method of claim 1 wherein an App Program Update Time Window is defined, as a well-defined daytime period during which one App in execution can be interrupted and closed automatically by the Operating System with the scope to restart new (updated) version of the program. The Program Update Time Window is necessary to avoid undesired building and home automation control services interruption and system malfunctions due to interruption of the controlling and regulation algorithm

11. The method of claim 1 wherein an Operating System Update Window is defined, as a well-defined daytime period during which execution of the operating system of the controlling hardware can be stopped automatically with the scope of update. The Operating System Update Time Window is necessary to avoid undesired building and home automation services interruption and system malfunctions due to interruption of the hardware operation

12. The method of claim 1 wherein a building and home automation Program Data Exchange Gateway (PDEG) is defined as well-precise and well-defined mechanism to exchange information between two or more Apps in execution on the same hardware control unit. The mechanism of the data exchange is imposed by the operating system through a common table read-write operation and API functions, while contents of a single cells or data parameters is documented by the developer of each independent App
